# EUROPEAN PATENT SPECIFICATION

(11) **EP 3 132 948 B1**
(45) Date of publication and mention of the grant of the patent: **05.09.2018**
(21) Application number: 15780184.6
(22) Date of filing: 18.03.2015
(51) Int. Cl.: B60C 9/18, B60C 9/00, B60C 9/20, D07B 1/06

(54) **TIRE**
REIFEN
PNEU

(30) Priority: 18.04.2014 JP 2014086699
(43) Date of publication of application: 22.02.2017
(73) Proprietor: Bridgestone Corporation, Tokyo 104-8340 (JP)
(72) Inventor: ONUKI Atsushi, Tokyo 104-8340 (JP)
(74) Representative: Oxley, Robin John George
(86) International application number: PCT/JP2015/057980
(87) International publication number: WO 2015/159633

(56) References cited:
- EP-A1- 0 655 352
- JP-A- H07 242 102
- JP-A- 2001 328 407
- JP-A- 2008 120 349
- JP-A- 2010 089 725
- JP-A- 2010 089 725
- US-A1- 2004 026 001

## Description

### TECHNICAL FIELD

The present invention relates to tires, and specifically to a tire according to improvement of the reinforced structure of a tread portion.

### BACKGROUND ART

Commonly, tires, particularly heavy-load tires used for heavy-load vehicles such as trucks and buses, have a structure in which plural belt layers are arranged in order to suppress diameter growth due to internal pressure and to protect a tread portion.

For example, a technology in which two crossing belt layers are arranged such that cords intersect each other at a tilt angle of 10 to 30°in a reverse direction with respect to a tire equatorial plane, and a high-angle belt layer is further arranged at a cord angle which is 5° or more higher than the cord angle of the crossing belt layers is known as a conventional technology according to the reinforced structure of a tread portion (see Patent Document 1). In such a layered belt structure, the effect of improving the circumferential rigidity of belts and suppressing diameter growth can be obtained by suppressing the movement of the cords of crossing belt layers by the cords of a high-angle belt layer, thereby suppressing the shrinkage of the crossing belt layers in the width direction of a tire, when tension is applied to the crossing belt layers in the circumferential direction of the tire.

### RELATED ART DOCUMENT

### PATENT DOCUMENT

Patent Document 1: Japanese Unexamined Patent Application Publication No. H8-244407. Attention is also drawn to the disclosures of JP2010 089725; US2004/026001 and EP0 655 352.

### SUMMARY OF THE INVENTION

### PROBLEMS TO BE SOLVED BY THE INVENTION

In recent years, reduction in environmental load has been increasingly demanded, and reduction in the used amount of a component material in the tire has also become an important problem from the viewpoint of tire weight reduction. Thus, it is important that improvement of a belt structure can be achieved together with the tire weight reduction. However, the above technology described in Patent Document 1 has been incapable of sufficiently satisfying the recent demand of the weight reduction.

In addition, it is conceivable that the weight of a tire is reduced by allowing the amount of steel used in a high-angle belt layer to be less than that in crossing belt layers; however, the diameter growth of the tire more easily occurs due to a decrease in the amount of steel. Accordingly, it has been necessary to prevent diameter growth to improve tire durability while reducing the weight of a tire.

Thus, an object of the present invention is to provide a tire such that both tire weight reduction and high durability are achieved by establishing a technology capable of ensuring the sufficient effect of preventing diameter growth even when the amount of steel used in a belt layer is decreased.

### MEANS FOR SOLVING THE PROBLEMS

The tire circumferential rigidity is enhanced by a high-angle belt layer which prevents crossing belt layers from shrinking in a tire width direction (Poisson deformation). As a result of intensive examination with attention to such a point, the present inventor found that the effect of suppressing shrinkage of crossing belt layers is obtained by enhancing the compressive rigidity of steel cords in a high-angle belt layer even when the amount of steel in the high-angle belt layer is reduced, and the present invention was thus accomplished.

In other words, the present invention is a tire including: two or more crossing belt layers including rubberized layers of steel cords tilting and extending at an angle of 10° to 30° with respect to a tire equatorial plane, the rubberized layers being arranged such that the directions of the cords of at least some of the layers intersect each other; and a high-angle belt layer including a rubberized layer of steel cords tilting and extending at an angle which is 5° or more greater than the angle of the crossing belt layers, wherein
the mass of the steel cords per unit area included in the high-angle belt layer is 85% or less of the mass of the steel cords per unit area included in the crossing belt layers; and
compressive rigidity per unit area in a cross section orthogonal to the longitudinal direction of the steel cords of the high-angle belt layer is greater than compressive rigidity per unit area in a cross section orthogonal to the longitudinal direction of the steel cords of the crossing belt layers.

In the present invention, it is preferable that the steel cords of the high-angle belt layer include a layer twisting structure including: a core portion including two or more core filaments arranged in parallel; and a sheath portion including plural sheath filaments twisted with each other and placed around the core portion. In addition, in the present invention, it is also preferable that the steel cords of the high-angle belt layer include a monofilament or a bundle of monofilaments. In this case, it is also preferable that the shape of a cross section orthogonal to the longitudinal direction of the monofilament is flat.

### EFFECTS OF THE INVENTION

According to the present invention, established is a technology capable of ensuring the sufficient effect of preventing diameter growth even when the amount of steel used in a belt layer is decreased, and a tire can be actualized such that both tire weight reduction and high durability are achieved.

### BRIEF DESCRIPTION OF THE DRAWINGS

FIG. 1 is a width-direction cross-sectional view illustrating one configuration example of a tire of the present invention.

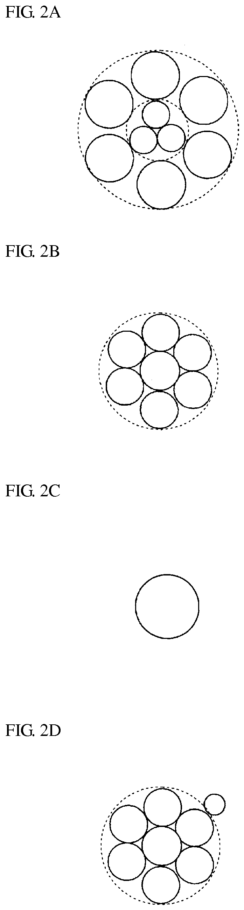

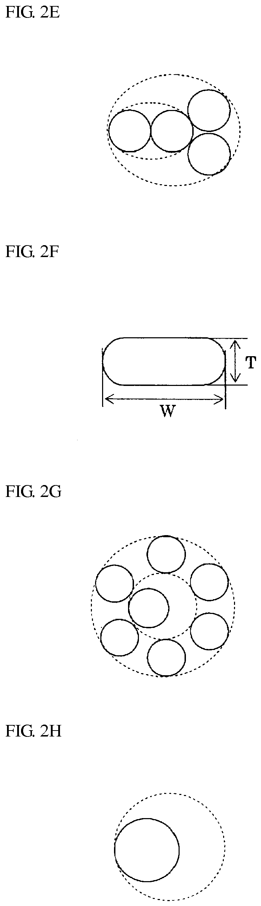

FIG. 2 is a schematic cross-sectional view illustrating the structure of steel cords used in Examples.
FIG. 3 is a schematic view illustrating the shape of a sample used for evaluating compressive rigidity in Examples.

FIG. 4 is an explanatory drawing illustrating a three-point bending test used for evaluating compressive rigidity in Examples.

### MODE FOR CARRYING OUT THE INVENTION

Embodiments of the present invention will be described in detail below with reference to the drawings.

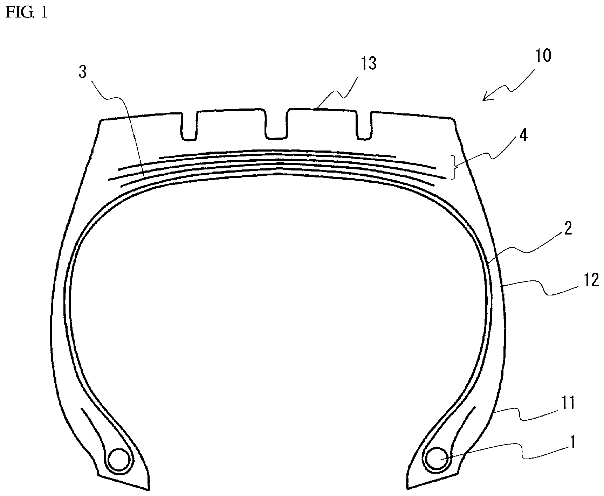

FIG. 1 is a width-direction cross-sectional view illustrating one configuration example of a tire of the present invention. The illustrated tire 10 includes a pair of bead portions 11, a pair of side wall portions 12 linked to the bead portions 11, and a tread portion 13 across both the side wall portions 12, and includes, as a framework, a carcass ply 2 toroidally extending across a pair of bead cores 1 respectively embedded in the bead portions 11.

In the present invention, a high-angle belt layer 3 and crossing belt layers 4 are arranged on the outside of a crown portion of the carcass ply 2 in a tire radial direction. Among them, the crossing belt layers 4 include two or more rubberized layers of steel cords tilting and extending at an angle of 10° to 30° with respect to a tire equatorial plane, for example, two to four rubberized layers may be disposed, and three rubberized layers are disposed in the illustrated example. The crossing belt layers 4 are arranged such that the directions of the cords of at least some of the layers intersect each other. In contrast, the high-angle belt layer 3 includes a rubberized layer of steel cords tilting and extending at an angle which is 5° or more greater than the angle of the crossing belt layers 4, for example, at 40° to 80° with respect to the tire equatorial plane.

In the present invention, it is necessary that compressive rigidity per unit area in a cross section orthogonal to the longitudinal direction of the steel cords of the high-angle belt layer 3 is greater than compressive rigidity per unit area in a cross section orthogonal to the longitudinal direction of the steel cords of the crossing belt layers 4. Even when the amount of steel used in the high-angle belt layer 3 is reduced in pursuit of weight reduction, the effect of suppressing the movement of the cords of the crossing belt layers 4 can be maintained by providing the high-angle belt layer 3 with steel cords that have a greater compressive rigidity than that of the crossing belt layers 4, and as a result, the effect of preventing diameter growth is ensured. In other words, the steel cords of the high-angle belt layer 3 are subjected to compression or bending deformation when an input due to the internal pressure of the tire is applied to the belt layers but, in the present invention, the compression or the bending deformation can be suppressed because of the compressive rigidity of such steel cords set at a greater compressive rigidity than that of the crossing belt layers. As a result, the effect of suppressing the movement of the crossing belt layers 4 are considered to be enhanced to result in the effect of preventing diameter growth that would otherwise be caused by the internal pressure of the tire.

In the present invention, compressive rigidity per unit area in a cross section orthogonal to the longitudinal direction of steel cords means rigidity in the case of applying compressive force to the steel cords in a direction orthogonal to the longitudinal direction of the steel cords. In the present invention, the above-described compressive rigidity of the steel cords of the high-angle belt layer 3 needs to be more than 100%, preferably more than 100% and 200% or less, more preferably 105 to 160%, and still more preferably 105 to 115%, of the above-described compressive rigidity of the steel cords of the crossing belt layers 4. An excessively great compressive rigidity of the steel cords of the high-angle belt layer 3 compared with that of the crossing belt layers 4 may result in an increase in distortion in the cord ends of the high-angle belt layer 3, may result in occurrence of separation in an end of the high-angle belt layer 3, and may result in deterioration of durability. In the present invention, the specific values of the above-described compressive rigidity of the steel cords of the high-angle belt layer 3 and the crossing belt layers 4 are not particularly restricted, but can be set as appropriate depending on a tire size and the like according to a usual method.

In the present invention, the mass of the steel cords per unit area included in the high-angle belt layer 3 is necessarily allowed to be 85% or less, preferably 40 to 80%, and more preferably 50 to 80%, of the mass of the steel cords per unit area included in the crossing belt layers 4. The reduction of the amount of steel included in the high-angle belt layer 3 to the above-described range enables effective reduction in the weight of the tire. In addition, in the present invention, even when the amount of steel included in the high-angle belt layer 3 is reduced to around the above-described range, the sufficient effect of preventing diameter growth can be ensured to enable the tire to have high durability, by incorporating the above-described conditions on the compressive rigidity of the steel cords.

In the present invention, the specific masses of the steel cords per unit area included in the high-angle belt layer 3 and the crossing belt layer 4 are not particularly restricted. The amount of the steel can be controlled by choosing the structure (the wire diameter and number of filaments, and the like) of the steel cords used in each layer, and the number of the placed steel cords as appropriate such that the conditions of the compressive rigidity of the cords described above are satisfied.

In the present invention, the specific structure of the steel cords used in each layer is not particularly restricted, but can be chosen as appropriate according to a usual method such that physical property values of interest are obtained for each layer. In particular, it is preferable to use the steel cords of the high-angle belt layer 3, the steel cords including a layer twisting structure including: a core portion including two or more core filaments arranged in parallel; and a sheath portion including plural sheath filaments twisted with each other and placed around the core portion. The compressive rigidity of such cords is high because the core portion includes no twisting structure. It is also preferable to use the steel cords of the high-angle belt layer 3, the steel cords including a monofilament or a bundle of monofilaments. In this case, the loss of the compressive rigidity of the cords can also be reduced because the monofilament includes no twisting structure. In this case, it is also preferable to use a flat monofilament having a flat shape of a cross section orthogonal to the longitudinal direction of the monofilament. By using a flat monofilament, the spacings between the steel cords in the layers are decreased, and therefore, the distortion deformation of rubber between the steel cords due to an input of internal pressure can be reduced.

In the illustrated example, the high-angle belt layer 3 and the crossing belt layers 4 are layered and arranged in the order mentioned from the inside in the radial direction of the tire; however, in the present invention, the order of the arrangement of the high-angle belt layer 3 and the crossing belt layers 4 is not limited thereto.

In the tire of the present invention, when the relationships of the compressive rigidity and steel amounts of the high-angle belt layer 3 and the crossing belt layers 4 satisfy the above-described conditions, and as a result, the desired effects of the present invention can be obtained. In the present invention, the structure of the tire, the materials of each configuration member, and the like, except the high-angle belt layer 3 and the crossing belt layers 4, are not particularly restricted, and can be chosen as appropriate from materials known in the art.

For example, the carcass ply 2 includes steel cords coated with rubber, it is necessary to arrange at least one carcass ply, and two or more carcass plies may be arranged. Both ends of the carcass ply 2 in the tire width direction are typically folded and locked around the bead cores 1 from the inside to the outside of the tire, as illustrated.

In the illustrated tire, a tread pattern is formed as appropriate on a surface of the tread portion 13, and an inner liner (not illustrated) is formed on an innermost layer. Further, typical air or air of which the oxygen partial pressure is changed, or an inert gas such as nitrogen can be used as a gas filled into the tire. The tire of the present invention is particularly suitable as heavy-load pneumatic tires applied to heavy-load vehicles such as trucks and buses.

### EXAMPLES

The present invention will be described in more detail below with reference to Examples.

A heavy-load tire having a tire size of 11R22.5 was produced for each of Examples and Comparative Examples. One high-angle belt layer at a cord angle of 50° in the right, two crossing belt layers at 20° in the right and 20° in the left, and a belt layer at 20° in the left, with respect to the tire equatorial plane, were arranged, in order from the inner most layer, on the outside of the crown portion of a carcass ply in a tire radial direction. Corresponding steel cords having cord structures shown in the following Tables were used in the high-angle belt layer and the crossing belt layers. In addition, steel cords similar to the steel cords of the crossing belt layers were used in the belt layer.

### <Evaluation of Compressive Rigidity (Cord Rigidity)>

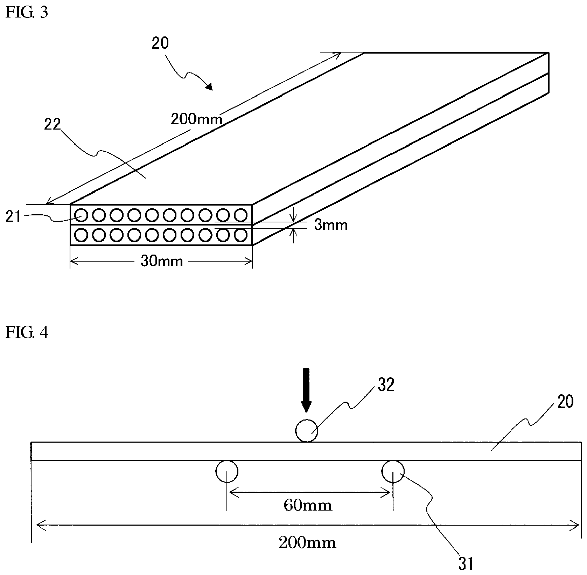

Compressive rigidity per unit area in a cross section orthogonal to the longitudinal direction of the steel cords of each belt layer was evaluated in the following manner. As illustrated in FIG. 3, two treats 22 in which ten steel cords 21 forming each belt layer were placed in a width of 30 mm were layered in parallel such that spacings between the centers of the cords were 3 mm, thereby producing a sample 20 having a length of 200 mm along the longitudinal direction of the cords. As illustrated in FIG. 4, the sample 20 was placed on two supporting points 31, which were arranged at an equal distance from the center in the longitudinal direction of the sample 20, a three-point bending test in conformity with JIS K7074 was conducted, the distance between the supporting points 31 being 60 mm, an indentation of 0 to 5 mm from a horizontal position provided downwardly in a vertical direction by an indenter 32, and the reaction force was evaluated as compressive rigidity. The radius of the supporting points was 2.0 mm, and the radius of the indenter was 5.0 mm.

### <Evaluation of Diameter Growth after Running>

Each obtained sample tire was filled to an internal pressure of 900 kPa, and the peripheral length of the tire was measured with a drum testing machine after running the tire for 50,000 km at a rate of 60 km/h. The percentage of elongation of the peripheral length of each tire compared with the peripheral length prior to the drum running with an internal pressure of 100 kPa was calculated and shown as an index in relation to a Conventional Example expressed as 100. Smaller numerical values indicate a smaller diameter growth after the running and are more desirable.

The results are shown in the following Tables.

**[Table 1]**

| | | Conventional Example | Example 1 | Example 2 | Example 3 |
|---|---|---|---|---|---|
| Kind of Cords | High-Angle Belt Layer | 3×0.20+6×0.35 | 3×0.20+6×0.35 | 0.38+6×0.35 | Monofilament 1×0.92 |
| | Cross-Sectional View of Cords (Reference Drawing) | FIG. 2A | FIG. 2A | FIG. 2B | FIG. 2C |
| | Crossing Belt Layer | 3×0.20+6×0.35 | 3×0.20+6×0.35 | 3×0.20+6×0.35 | 3×0.20+6×0.35 |
| Twisting Pitch (mm) | High-Angle Belt Layer | 10.0/18.0 | 13.9/25.0 | -/22.0 | - |
| | Crossing Belt Layer | 10.0/18.0 | 10.0/18.0 | 10.0/18.0 | 10.0/18.0 |
| Amount of Steel (g/mm²) | High-Angle Belt Layer | 2.23 | 2.13 | 2.18 | 2.20 |
| | Crossing Belt Layer | 2.76 | 2.76 | 2.76 | 2.76 |
| Steel Amount Ratio (High-Angle Belt Layer/Crossing Belt Layer) (%) | | 80.8 | 76.9 | 79.0 | 79.6 |
| Cord Rigidity of High-Angle Belt Layer (Index) | | 100 | 108 | 116 | 140 |
| Steel Mass of High-Angle Belt Layer (Index) | | 100 | 95 | 98 | 99 |
| Running Growth (Index) | | 100 | 99 | 97 | 95 |

**[Table 2]**

| | | Example 4 | Example 5 | Example 6 |
|---|---|---|---|---|
| Kind of Cords | High-Angle Belt Layer | 0.38+6×0.35+0.15 | 2+2×0.30(2(parallel)+2) | Flat monofilament (W: 1.0 mm, T: 0.4 mm) |
| | Cross-Sectional View of Cords (Reference Drawing) | FIG. 2D | FIG. 2E | FIG. 2F |
| | Crossing Belt Layer | 3×0.20+6×0.35 | 3×0.20+6×0.35 | 3×0.20+6×0.35 |
| Twisting Pitch (mm) | High-Angle Belt Layer | -/- (Zero twist) | -/16.0 | - |
| | Crossing Belt Layer | 10.0/18.0 | 10.0/18.0 | 10.0/18.0 |
| Amount of Steel (g/mm²) | High-Angle Belt Layer | 2.17 | 2.10 | 2.07 |
| | Crossing Belt Layer | 2.76 | 2.76 | 2.76 |
| Steel Amount Ratio (High-Angle Belt Layer/Crossing Belt Layer) (%) | | 78.5 | 79.6 | 79.6 |
| Cord Rigidity of High-Angle Belt Layer (Index) | | 118 | 110 | 158 |
| Steel Mass of High-Angle Belt Layer (Index) | | 97 | 94 | 93 |
| Running Growth (Index) | | 96 | 92 | 91 |

**[Table 3]**

| | | Comparative Example 1 | Comparative Example 2 | Comparative Example 3 |
|---|---|---|---|---|
| Kind of Cords | High-Angle Belt Layer | 3×0.20+6×0.35 | 0.35+6×0.35^{*1} | Monofilament 1×0.92^{*2} |
| | Cross-Sectional View of Cords (Reference Drawing) | FIG. 2A | FIG. 2G | FIG. 2H |
| | Crossing Belt Layer | 3×0.20+6×0.35 | 3×0.20+6×0.35 | 3×0.20+6×0.35 |
| Twisting Pitch (mm) | High-Angle Belt Layer | 10.0/18.0 | -/22.0 | - |
| | Crossing Belt Layer | 10.0/18.0 | 10.0/18.0 | 10.0/18.0 |
| Amount of Steel (g/mm²) | High-Angle Belt Layer | 2.13 | 2.18 | 2.20 |
| | Crossing Belt Layer | 2.76 | 2.76 | 2.76 |
| Steel Amount Ratio (High-Angle Belt Layer/Crossing Belt Layer) (%) | | 76.9 | 79.0 | 79.6 |
| Cord Rigidity of High-Angle Belt Layer (Index) | | 100 | 98 | 96 |
| Steel Mass of High-Angle Belt Layer (Index) | | 95 | 98 | 99 |
| Running Growth (Index) | | 103 | 103 | 104 |

| | | | | |
|---|---|---|---|---|
| *1) Core filaments were subjected to spiral shaping. *2) Monofilaments were subjected to spiral shaping. | | | | |

As can be clear from the results shown in the Tables above, it has been confirmed that higher compressive rigidity of the steel cords of a high-angle belt layer than that in crossing belt layers suppresses diameter growth to ensure tire durability and even when the amount of steel used in the belt layers is reduced in pursuit of tire weight reduction.

### DESCRIPTION OF SYMBOLS

- 1: Bead core
- 2: Carcass ply
- 3: High-angle belt layer
- 4: Crossing belt layer
- 10: Tire
- 11: Bead portion
- 12: Side wall portion
- 13: Tread portion
- 20: Sample
- 21: Steel cord
- 22: Treat
- 31: Supporting point
- 32: Indenter

## Claims

1. A tire (10) comprising: two or more crossing belt layers (4) comprising rubberized layers of steel cords tilting and extending at an angle of 10° to 30° with respect to a tire equatorial plane, the rubberized layers being arranged such that the directions of the cords of at least some of the layers intersect each other; and a high-angle belt layer (3) comprising a rubberized layer of steel cords tilting and extending at an angle which is 5° or more greater than the angle of the crossing belt layers, **characterised in that**:
the mass of the steel cords per unit area included in the high-angle belt layer is 85% or less of the mass of the steel cords per unit area included in the crossing belt layers; and
compressive rigidity per unit area in a cross section orthogonal to the longitudinal direction of the steel cords of the high-angle belt layer is greater than compressive rigidity per unit area in a cross section orthogonal to the longitudinal direction of the steel cords of the crossing belt layers.

2. The tire according to claim 1, wherein the steel cords of the high-angle belt layer comprise a layer twisting structure comprising: a core portion comprising two or more core filaments arranged in parallel; and a sheath portion comprising plural sheath filaments twisted with each other and placed around the core portion.

3. The tire according to claim 1, wherein the steel cords of the high-angle belt layer comprise a monofilament or a bundle of monofilaments.

4. The tire according to claim 3, wherein the shape of a cross section orthogonal to the longitudinal direction of the monofilament is flat.

## Patentansprüche

1. Reifen (10), der Folgendes umfasst: zwei oder mehr sich kreuzende Gürtellagen (4), die gummierte Lagen von Stahlkords umfassen, die sich in einem Winkel von 10° bis 30° in Bezug auf eine Reifenäquatorialebene neigen und erstrecken, wobei die gummierten Lagen derart angeordnet sind, dass die Richtungen der Kords wenigstens einiger Lagen einander schneiden, und eine Großwinkel-Gürtellage (3), die eine gummierte Lage von Stahlkords umfasst, die sich in einem Winkel neigt und erstreckt, der 5° oder mehr größer ist als der Winkel der sich kreuzenden Gürtellagen, **dadurch gekennzeichnet, dass**:
die Masse der Stahlkords je Flächeneinheit, die in der Großwinkel-Gürtellage eingeschlossen sind, 85% oder weniger der Masse der Stahlkords je Flächeneinheit, die in den sich kreuzenden Gürtellagen eingeschlossen sind, beträgt, und
die Drucksteifigkeit je Flächeneinheit in einem Querschnitt, senkrecht zur Längsrichtung der Stahlkords der Großwinkel-Gürtellage, größer ist als die Drucksteifigkeit je Flächeneinheit in einem Querschnitt, senkrecht zur Längsrichtung der Stahlkords der sich kreuzenden Gürtellagen.

2. Reifen nach Anspruch 1, wobei die Stahlkords der Großwinkel-Gürtellage eine Lagenverdrillungsstruktur umfassen, die Folgendes umfasst: einen Kernabschnitt, der zwei oder mehr Kernfilamente umfasst, die parallel angeordnet sind, und einen Hüllenabschnitt, der mehrere Hüllenfilamente umfasst, die miteinander verdrillt und um den Kernabschnitt angeordnet sind.

3. Reifen nach Anspruch 1, wobei die Stahlkords der Großwinkel-Gürtellage ein Monofilament oder ein Bünden von Monofilamenten umfassen.

4. Reifen nach Anspruch 3, wobei die Form eines Querschnitts, senkrecht zur Längsrichtung des Monofilaments, flach ist.

## Revendications

1. Bandage pneumatique (10), comprenant deux ou plusieurs couches de ceinture à croisement (4) comprenant des couches caoutchoutées de câbles d'acier à inclinaison, s'étendant à un angle compris entre 10° et 30° par rapport à un plan équatorial du bandage pneumatique, les couches caoutchoutées étant agencées de sorte que les directions des câbles d'au moins certaines des couches se coupent les unes les autres ; et une couche de ceinture à angle élevé (3) comprenant une couche caoutchoutée de câbles d'acier à inclinaison, s'étendant à un angle de 5° ou plus, supérieur à l'angle des couches de ceinture à croisement, **caractérisé en ce que** :
la masse des câbles d'acier par unité de surface inclus dans la couche de ceinture à angle élevé représente 85% ou moins de la masse des câbles d'acier par unité de surface inclus dans les couches de ceinture à croisement ; et
la rigidité à la compression par unité de surface dans une section transversale orthogonale à la direction longitudinale des câbles d'acier de la couche de ceinture à angle élevé est supérieure à la rigidité à la compression par unité de surface dans une section transversale orthogonale à la direction longitudinale des câbles d'acier des couches de ceinture à croisement.

2. Bandage pneumatique selon la revendication 1, dans lequel les câbles d'acier de la couche de ceinture à angle élevé comprennent une structure à torsion des couches, comprenant : une partie de noyau comprenant deux ou plusieurs filaments de noyau agencés de manière parallèle ; et une partie de gaine comprenant plusieurs filaments de gaine torsadés les uns avec les autres et placés autour de la partie de noyau.

3. Bandage pneumatique selon la revendication 1, dans lequel les câbles d'acier de la couche de ceinture à angle élevé comprennent un monofilament ou un faisceau de monofilaments.

4. Bandage pneumatique selon la revendication 3, dans lequel la forme d'une section transversale orthogonale à la direction longitudinale du monofilament est plate.
